# EUROPEAN PATENT APPLICATION

(11) **EP 2 604 885 A1**
(43) Date of publication of application: **19.06.2013**
(21) Application number: 11193007.9
(22) Date of filing: 12.12.2011
(51) Int. Cl.: F16F 15/36

(54) **Method, apparatus and system for reducing vibration in a rotary system**

(71) Applicant: Carnehammar, Lars Bertil, 8032 Zürich (CH)
(72) Inventor: Ronlan, Alvin, 114 59 Stockholm (SE)
(74) Representative: Plougmann & Vingtoft A/S

(57) **Abstract**

A method of reducing vibration in a rotary system (100), comprising: providing a rotational element (200, 201) comprising a chamber (210, 211) comprising a circumferential balancing area (220, 221), having a cross section and being filled with an amount of a balancing substance (230, 231), said rotational element (200, 201) and said chamber (210, 211) having a rotational axis (240), balancing said rotary system (100), characterized in that said cross section is a changeable cross section, and said cross section is adapted in response to said balancing; a corresponding apparatus and system.

## Description

### Field of the Invention

Embodiments of the invention described herein relate generally to reducing vibration, and more particularly to a method, an apparatus and a system for reducing vibration in a rotary system such as a vehicle tire or vehicle wheel.

### Background of the Invention

Vibration is a major factor in a rotary system, for example a vehicle wheel. Vibration negatively effects durability, that is service interval and life time, safety and comfort. With regard to safety, vibration has a direct influence on stability and may cause material fatigue and damage. With regard to comfort, vibration has a direct influence on noise and may increase a level of noise. Moreover, vibration-induced noise may be amplified by an overall system, for example a motor vehicle, comprising the rotary system.

A rotary system may, for example, comprise a tyre, rim, shaft, bearing, rotor, or a combination thereof. A main source of vibration of the rotary system is imbalance. Vibrations may comprise rotation-speed-dependent vibrations generally originating from the rotary system. Vibrations may damage rolling-element bearings, for example ball bearings or roller bearings, used, for example, as bearings, or seals.

In order to reduce vibration, the rotary system may initially be balanced during production of the rotary system by selectively removing material from, or adding material to, a rotating element of the rotary system such that its centre of gravity (CofG) is moved to its centre of rotation (CofR), that is fulcrum. Removing material may comprise abrading, for example grinding, material from the rotating element, or drilling a hole into the rotating elements, or a combination thereof. Adding material may comprise attaching, for example gluing, material to the rotating element. However, the removing or adding step is an additional step in production, requiring time and increasing cost, particularly in large-volume production.

Moreover, owing to wear and tear of the rotary system, or collection of particles, for example dirt, in the rotary system, vibration in the rotary system generally increases over time. In more detail, owing to wear and tear of a rotating element, its CofG moves away from the CofR over time causing an imbalance causing vibration.

German patent application DE 198 53 691 A1 defines substance characteristic, shape, weight, geometry and deposition locations of a tyre-balancing substance as internal circumferential gel bead in a tyre having an internal surface exhibiting defined shape and geometry. The tyre has one or more circumferential grooves, or a tubular hollow part to accept the tyre-balancing substance.

PCT patent application WO 2009/037314 discloses a method of processing a vehicle tyre and a thixotropic balancing substance, comprising providing a first amount of the balancing substance to a first circumferential balancing area on an inner side of the vehicle tyre comprising distributing the first amount of the balancing substance on the first balancing area substantially uniformly; and a corresponding apparatus and system. The vehicle tyre comprises a circumferential balancing area on the inner side, for example an inner liner of the tyre.

For these and other reasons, there is a need for the invention as set forth in the following in the embodiments.

### Summary of the Invention

The invention aims to provide a method, an apparatus and a system for reducing vibration in a rotary system.

This object is solved by the subject matter of the independent claims.

An aspect of the invention is a method of reducing vibration in a rotary system 100, comprising providing a rotational element 200, 201 comprising a chamber 210, 211 comprising a circumferential balancing area 220, 221, having a cross section and being filled with an amount of a balancing substance 230, 231, said rotational element 200, 201 and said chamber 210, 211 having a rotational axis 240, balancing said rotary system 100, characterized in that said cross section is a changeable cross section, and said cross section is adapted in response to said balancing.

Another aspect of the invention is a method, further comprising rotating said rotational element 200, 201 about said rotational axis 240, such that said balancing substance 230, 231 distributes itself along the circumferential balancing area 220, 221 and adapts said cross section, and an imbalance of said rotational system 100 is reduced.

Another aspect of the invention is a method, further comprising attaching said rotational element 200, 201 to said rotary system 100.

Another aspect of the invention is a method, wherein attaching said rotational element 200, 201 comprises affixing, gluing or bracing said rotational element 200, 201 to said rotary system 100.

Another aspect of the invention is a method, wherein said rotary system 100 is a vehicle tyre or a vehicle wheel comprising said vehicle tyre and a rim; and attaching said rotational element 200, 201 comprises inserting said rotational element 200, 201 into said tyre, attaching said rotational element 200, 201 to said rim, wherein said rotational element 200, 201 may be attached on an inner side of said rim, an outer side of said rim, on said rim towards said vehicle tyre or on said rim towards said rotational axis 240, or a combination thereof.

Another aspect of the invention is a method, wherein said rotational element 200, 201 is an original element of said rotary system 100, a replacement element of said rotary system 100, or a supplemental element to said rotary system 100. Another aspect of the invention is a method, wherein said rotational element 200, 201 is a hollow shaft or tubular shaft. Another aspect of the invention is a method, wherein said rotational element 200, 201 is an articulated shaft, for example a cardan shaft. Another aspect of the invention is a method, wherein said rotational element 200, 201 is flexible. Another aspect of the invention is a method, wherein said rotational element 200, 201 is ductile. Another aspect of the invention is a method, wherein said rotational element 200, 201 is a tube, for example a flexible tube. Another aspect of the invention is a method, wherein said rotational element 200, 201 is a cover, for example a flexible cover, forming said cross section together with said rotary system 100.

Another aspect of the invention is a method, wherein said chamber 210, 211 is annular or ring-shaped, or cylindrical. Another aspect of the invention is a method, wherein said chamber 210, 211 is closed or sealed. Another aspect of the invention is a method, wherein said chamber 210, 211 has a diameter of between 0.005 m and 2 m, or between 0.01 m and 1 m, or between 0.02 m and 0.5 m, or between 0.05 m and 0.2 m, or 0.1 m. Another aspect of the invention is a method, wherein said chamber 200, 211 has a length of between 0.001 m and 10 m, or 0.002 m and 5 m, or 0.005 m and 2 m, or between 0.01 m and 1 m, or between 0.02 m and 0.5 m, or between 0.05 m and 0.2 m, or 0.1 m. Another aspect of the invention is a method, wherein said cross section is rectangular, for example rounded rectangular, square, semicircle-shaped, bell-shaped, circular, elliptical or oval. Another aspect of the invention is a method, wherein said cross section has a circumference, said circumference having a constant length or a variable length.

Another aspect of the invention is a method, wherein, wherein: said amount of said balancing substance 230, 231 is between 0.001 kg and 1000 kg, or between 0.002 kg and 500 kg, or between 0.005 kg and 200 kg, or between 0.01 kg and 100 kg, or between 0.02 kg and 50 kg, or between 0.05 kg and 20 kg, or between 0.1 kg and 10 kg, or between 0.2 kg and 5 kg, or between 0.5 kg and 2 kg, or 1 kg.

Another aspect of the invention is a method, wherein said balancing substance 230, 231 is a thixotropic balancing substance.

Another aspect of the invention is an apparatus for reducing vibration in a rotary system 100, comprising a rotational element 200, 201 comprising a chamber 210, 211 comprising a circumferential balancing area 220, 221, having a cross section and being filled with an amount of a balancing substance 230, 231, said rotational element 200, 201 and said chamber 210, 211 having a rotational axis 240, characterized in that said cross section is a changeable cross section, and said cross section is adaptable in response to balancing said rotary system 100.

Another aspect of the invention is a balancing system for reducing vibration in a rotary system 100, comprising a rotational element 200, 201 comprising a chamber 210, 211 comprising a circumferential balancing area 220, 221, having a cross section and being filled with an amount of a balancing substance 230, 231, said rotational element 200, 201 and said chamber 210, 211 having a rotational axis 240, characterized in that said cross section is a changeable cross section, and said cross section is adaptable in response to balancing said rotary system 100.

According to the aspects of the invention, the rotational element 200, 201 contains the balancing substance 230, 231 and, hence, isolates the balancing substance 230, 231 from any rotary system 100, and guides the balancing substance 230, 231 during balancing. Further, the aspects of the invention simplify handling of the balancing system and applying the balancing system to the rotary system 100. In more detail, the balancing system comprising the rotational element 200, 201 containing the balancing substance 230, 231 may, for example, be pre-produced, preferably in a number of configurations, and, optionally, tested, and, later in a factory of a vehicle manufacture or a repair shop, the balancing system may be glued into a vehicle tyre on an inner liner. Furthermore, the aspects of the invention reduce weight of the balancing system. In more detail, as the cross section of the rotational element 200, 201 adapts in response to the balancing, for example the distribution of the balancing substance 230, 231, the rotational element 200, 201 may be more compactly designed without head space, that would require a fixed larger cross section of the rational element and, thus, result in an increased weight of the rotational element 200, 201. For a given circumference, an area of any cross section may vary between zero and a maximum area for a given cross section. In this regard, a round cross section yields the largest maximum area. As the rotational element 200, 201 does not have to provide head space containing a medium having a density that is lower than a density of the balancing substance 230, 231, for example a gas or mixtures of gases, for example atmospheric air, the balancing system is pressure-tight and pressure-resistant.

### Brief Description of the Several Views of the Drawing

While the specification concludes with claims particularly pointing out and distinctly claiming that which is regarded as the invention, a more particular description of the invention will be rendered by reference to specific embodiments thereof, which are depicted in the appended drawing, in order to illustrate the manner in which embodiments of the invention are obtained. Understanding that the drawing depicts only typical embodiments of the invention, that are not necessarily drawn to scale, and, therefore, are not to be considered limiting of its scope, embodiments will be described and explained with additional specificity and detail through use of the accompanying drawing in which:
Fig. 1 shows a cross-sectional view of a vehicle tyre 100 comprising a known balancing system;
Fig. 2 shows a cross-sectional axial view of a vehicle tyre 100 comprising a balancing system according to an embodiment of the invention;
Fig. 3 shows a corresponding cross-sectional view of the vehicle tyre 100 comprising the balancing system according to this embodiment of the invention;
Fig. 4 shows a cross-sectional view of the vehicle tyre 100 comprising a balancing system according to a modified embodiment of the invention;
Fig. 5 shows a cross-sectional axial view of a balancing system according to another embodiment of the invention;
Fig. 6 shows a corresponding cross-sectional view of the balancing system according to this other embodiment of the invention;
Fig. 7 illustrates different configurations of an exemplary rotational element 200 having a changeable cross section with a constant circumference;
Fig. 8 illustrates different configurations of an exemplary rotational element 200 having a changeable cross section with a variable circumference;
Fig. 9 shows exemplary representations of accelerations of a vehicle tyre over time without any balancing system, a vehicle tyre over time with metal weights, and a modified vehicle tyre over time with two supplemental rotational elements without balancing substance;
Fig. 10 shows an exemplary representation of accelerations of a vehicle tyre over time in a first cycle of five cycles with two supplemental rotational elements each of which comprising an amount of balancing substance;
Fig. 11 shows an exemplary representation of accelerations of the vehicle tyre over time in a second cycle with two supplemental rotational elements each of which comprising the amount of the balancing substance;
Fig. 12 shows an exemplary representation of accelerations of the vehicle tyre over time in a third cycle with two supplemental rotational elements each of which comprising the amount of the balancing substance;
Fig. 13 shows an exemplary representation of accelerations of the vehicle tyre over time in a fourth cycle with two supplemental rotational elements each of which comprising the amount of the balancing substance; and
Fig. 14 shows an exemplary representation of accelerations of the vehicle tyre over time in a fifth cycle with two supplemental rotational elements each of which comprising the amount of the balancing substance.

### Detailed Description of the Invention

In the detailed description of the embodiments, reference is made to the accompanying drawing which forms a part hereof and shows, by way of illustration, specific embodiments in which the invention may be practiced. In order to show the structures of the embodiments most clearly, the drawing included herein is a diagrammatic representation of inventive articles. Thus, actual appearance of the fabricated structures may appear different while still incorporating essential structures of embodiments. Moreover, the drawing shows only the structures necessary to understand the embodiments. Additional structures known in the art have not been included to maintain clarity of the drawings. It is also to be understood, that features and/or elements depicted herein are illustrated with particular dimensions relative to one another for purposes of simplicity and ease of understanding, and that actual dimensions may differ substantially from that illustrated herein. In the drawing, like numerals describe substantially similar components throughout the several views. The embodiments are intended to describe aspects of the invention in sufficient detail to enable those of skill in the art to practice the invention. Other embodiments may be utilized and structural, logical or electrical changes or combinations thereof may be made without departing from the scope of the invention. Moreover, it is to be understood, that the various embodiments of the invention, although different, are not necessarily mutually exclusive. For example, a particular element, feature, structure, characteristic, integer or step, or group of elements, features, structures, characteristics, integers or steps described in one embodiment may be included within other embodiments. Furthermore, it is to be understood, that embodiments of the invention may be implemented using different technologies. Also, the term "exemplary" is merely meant as an example, rather than the best or optimal. The detailed description is, therefore, not to be taken in a limiting sense.

Throughout this specification the word "comprise" or variations such as "comprises" or "comprising", will be understood to imply the inclusion of a stated element, integer or step, or group of elements, integers or steps, but not the exclusion of any other element, integer or step, or group of elements, integers or steps.

In the description and claims, the terms "included", "have", "with" or other variants thereof may be used. It is to be understood, that such terms are intended to be inclusive in a manner similar to the term "comprise".

In the description and claims, the terms "coupled" and "connected", along with derivatives such as "communicatively coupled" may be used. It is to be understood, that these terms are not intended as synonyms for each other. Rather, in particular embodiments, "connected" may be used to indicate, that two or more elements are in direct physical or electrical contact with each other. However, "coupled" may also mean that two or more elements are not in direct contact with each other, but yet still co-operate or interact with each other.

In the description and claims, terms, such as "upper", "lower", "first", "second", etc., may be only used for descriptive purposes and are not to be construed as limiting. The embodiments of a device or article described herein can be manufactured, used, or shipped in a number of positions and orientations.

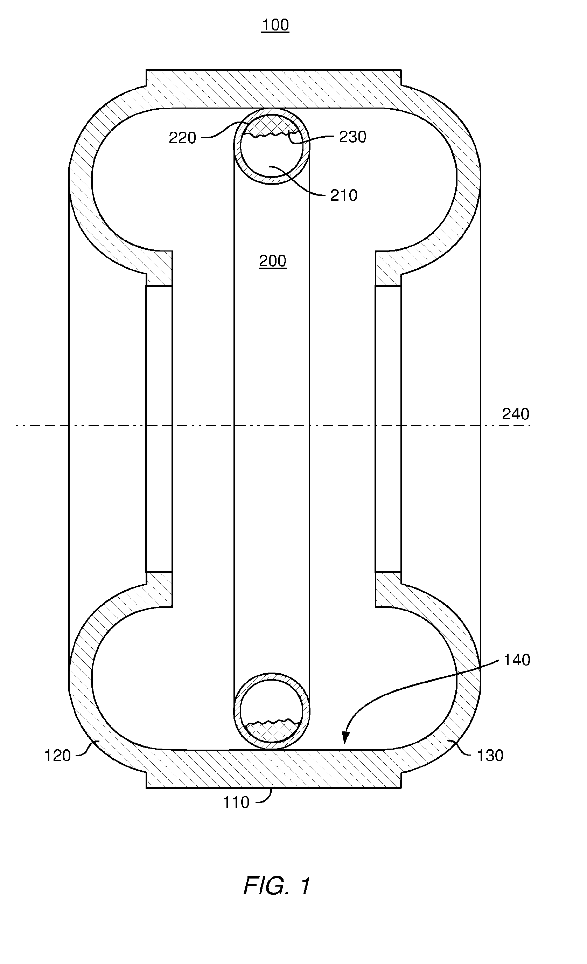

Fig. 1 shows a cross-sectional view of a vehicle tyre 100 comprising a known balancing system. The vehicle tyre 100 comprises a circumferential tread surface 110 defining a tread face on an outer surface, a first sidewall portion 120 with a first shoulder portion and a first bead portion, and a second sidewall portion 130 with a second shoulder portion and a second bead portion axially spaced from the first bead portion to form a toroidal shape and an annular hollow. The vehicle tyre 100 further comprises an inner liner 140 on an inner surface between the first sidewall portion 120 and the second sidewall portion 130. The vehicle tyre 100 is rotatable around a rotational axis 240. The vehicle tyre 100 further comprises the known balancing system arranged between the first shoulder portion and the second shoulder portion, approximately in a centre area.

The known balancing system comprises a toroidal rotational element 200 providing an annular chamber 210 with a circumferential balancing area 220 and a balancing substance 230 partially filling the chamber 210 of the rotational element 200.

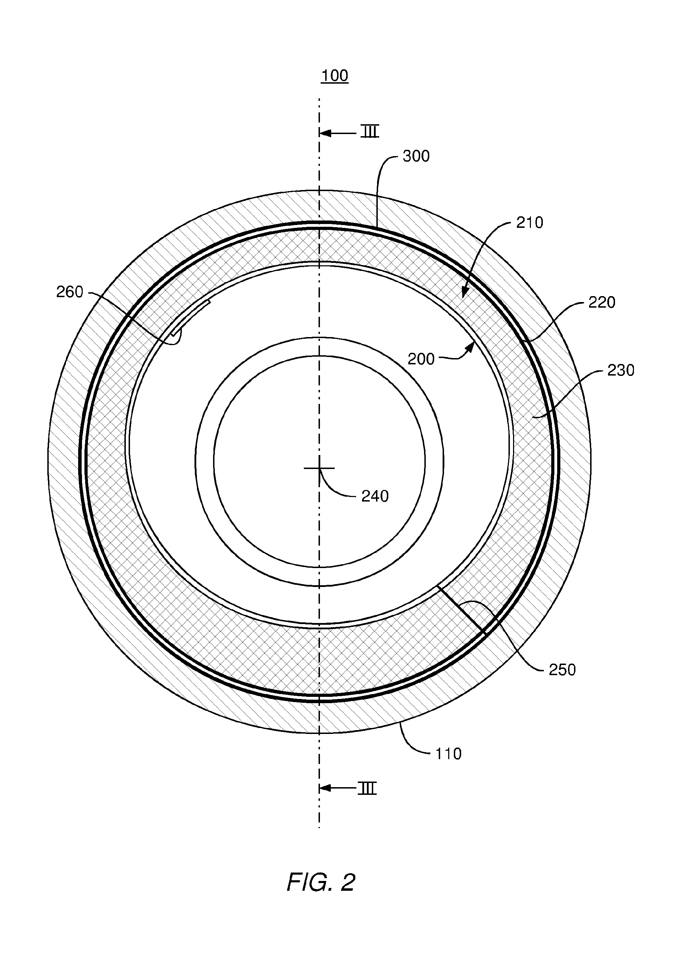

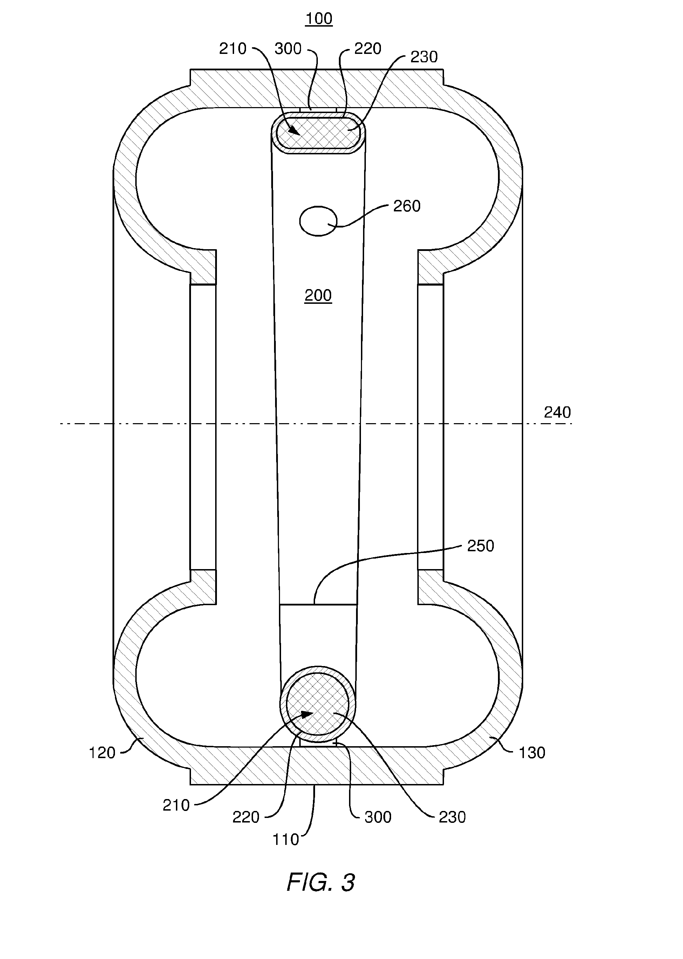

Fig. 2 shows a cross-sectional axial view of a vehicle tyre 100 comprising a balancing system according to an embodiment of the invention. Fig. 3 shows, along intersection line III-III in Fig. 2, a corresponding cross-sectional view of the vehicle tyre 100 comprising the balancing system according to this embodiment of the invention. The vehicle tyre 100 comprises a circumferential tread surface 110 defining a tread face on an outer surface, a first sidewall portion 120 with a first shoulder portion and a first bead portion, and a second sidewall portion 130 with a second shoulder portion and a second bead portion axially spaced from the first bead portion to form a toroidal shape and an annular hollow. The vehicle tyre 100 is rotatable around a rotational axis 240. The vehicle tyre 100 may be a pneumatic tyre and comprise a pressurized gas or mixture of gases, for example atmospheric air (not shown). The vehicle tyre 100 may be intended for a motorized vehicle, for example a car, bus, light truck, heavy truck or motorcycle, or an aircraft. The vehicle tyre 100 further comprises the balancing system according to this embodiment of the invention arranged between the first shoulder portion and the second shoulder portion, approximately in a centre area. The balancing system comprises a rotational element 200 providing an annular chamber 210 with a circumferential balancing area 220 and a balancing substance 230 filling the chamber 210 of the rotational element 200. The chamber 210 has a changeable cross section, and the changeable cross section is adapted in response to balancing of the vehicle tyre 100, that is distribution of the balancing substance 230 in the chamber 210.

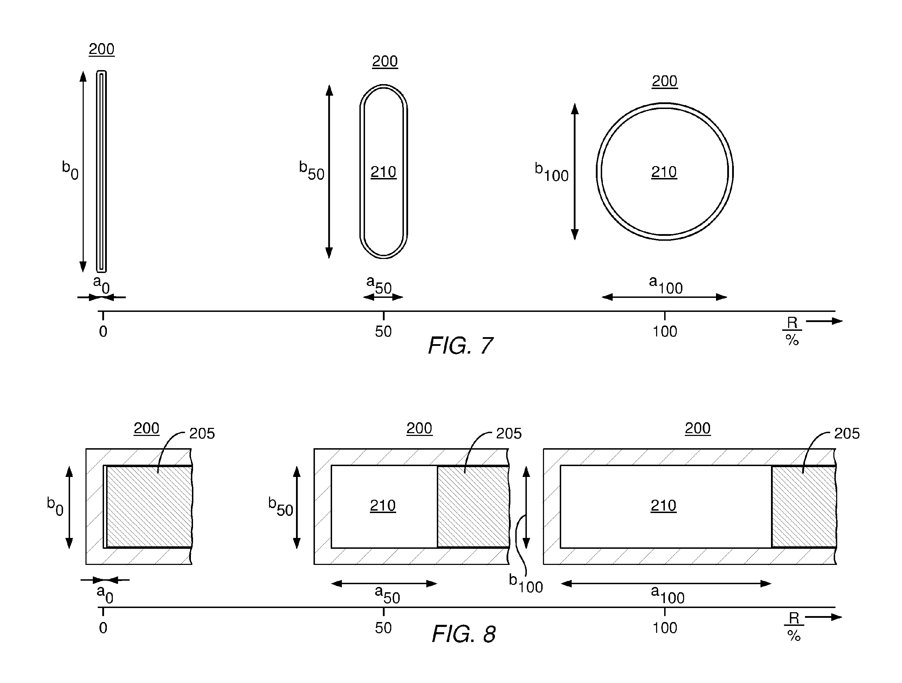

The rotational element 200 may be a flexible rotational element, such as a tube, film, membrane or foil, made of elastic material, such as latex, polytetrafluoroethylene (PTFE), polyvinyl chloride (PVC), polyamide, rubber or synthetics. The rotational element 200 may, for example, be blown, casted such as rotational casted, extruded, moulded or poured. Thus, the rotational element 200, which is annular, may have a joint 250, such as a seam, where ends of endless, configured material may be attached, for example glued, welded such as ultra-sound welded, or vulcanised such as chemically vulcanized or cold vulcanised. Owing to flexibility of the flexible rotational element, an area of the changeable cross section at points around the flexible rotational element is variable, although a circumference of the cross section is constant, as will be discussed in more detail with reference to Fig. 7. However, as shown in Fig. 3, the area of the cross section may vary, for example, from a smaller rounded rectangular area housing a smaller amount of balancing substance to a larger round area housing a larger amount of balancing substance. Further, said rotational element 200 may be a cover, for example a flexible cover, forming said cross section together with said rotary system 100. For example, a band, for example a flat flexible rubber band, may be attached, for example glued, welded such as ultra-sound welded, or vulcanised such as chemically vulcanized or cold vulcanised to an inner liner of a vehicle tyre, or to a rim, along two circumferential fixing lines being spaced apart, such that the chamber 210 is formed by the inner liner, or the rim, and the band, and the circumferential balancing area 220 is formed on the inner liner.

The circumferential balancing area 220 may comprise a nanostructure for improving movability and flow of the balancing substance 230, said nanostructure being, for example, formed by a material, such as a varnish, comprising nanoparticles, or imprinted on said circumferential balancing area 220.

The balancing substance 230 operating in the chamber 210 may be a thixotropic balancing substance. Owing to vibration, the thixotropic balancing substance liquefies and distributes itself along the circumferential balancing area 220, such that a CofG moves towards the rotational axis 240, that is CofR, of the vehicle tyre 100, and the vibration is reduced or minimized or eliminated. Without vibration, the thixotropic balancing substance solidifies again and maintains its position. An amount of the balancing substance 230 may be inserted into the rotational element 200 during extrusion or before the ends are attached to each other. The amount of the balancing substance 230 may also be inserted, for example injected, into the rotational element 200 through an opening (not shown), such as a hole, or a valve, located, for example, on an inner side of the rotational element 200, preferably opposite to the circumferential balancing area 220. The opening (not shown) may be self-sealing, vulcanised, or closed with a seal 260 attached, for example glued or vulcanised, to the rotational element 200. The amount of the balancing substance 230 may already be inserted while the rotational element 200 is formed and produced. The amount of the balancing substance 230 may preferably be initially approximately uniformly distributed in the rotational element 200, for example by running the rotational element 200 comprising the balancing substance 230 filling the chamber 210 through a rolling press.

The balancing system may be attached, for example glued or vulcanised, to the rotary system, for example the vehicle tyre 100. For example, the balancing system may be glued to the vehicle tyre 100 using an amount of glue 300. As shown in Figs 2 and 3, the amount of glue 300 may be distributed along the circumference of the rotational element 200.

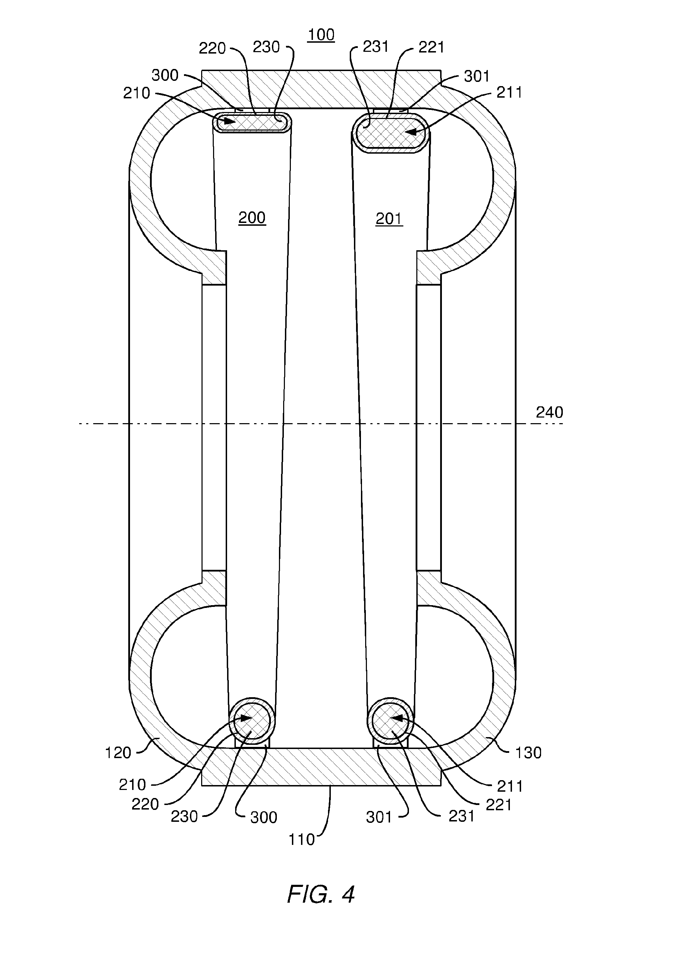

Fig. 4 shows a cross-sectional view of the vehicle tyre 100 comprising a balancing system according to a modified embodiment of the invention. The balancing system according to the modified embodiment of the invention comprises a first rotational element 200 comprising a first amount of balancing substance 230 and arranged between the first shoulder portion and the second shoulder portion, closer, preferably next, to the first shoulder portion, and a second rotational element 201 comprising a second amount of the balancing substance 231 and arranged between the first shoulder portion and the second shoulder portion, closer, preferably next, to the second shoulder portion. The second rotational element 201 may be processed similarly or identically to, and preferably simultaneously with, the first rotational element 200. Owing to flexibility of the flexible rotational elements, areas of the changeable cross sections at points along the flexible rotational elements are variable, although circumferences of the cross sections are constant, as will be discussed in more detail with reference to Fig. 7. However, as shown in Fig. 4, the areas of the cross sections may vary, for example, from a smaller rounded rectangular area housing a smaller amount of balancing substance to a larger round area housing a larger amount of balancing substance. As the first rotational element 200 and the second rotational element 201 are separate and spaced apart, and operate independently, the balancing system according to the modified embodiment of the invention may reduce vibrations owing to significant geometrical abnormality, such as axial run-out or radial run-out and / or significant variations in axial, radial or tangential stiffness. Thus, according to embodiments of the invention, one, two, three or more rotational elements 200, 201 of the balancing system comprise one, two, three or more chambers 210 having a fulcrum on a rotational axis 240, comprising a circumferential balancing area 220, 2221 and being filled with an amount of a balancing substance 230, 231.

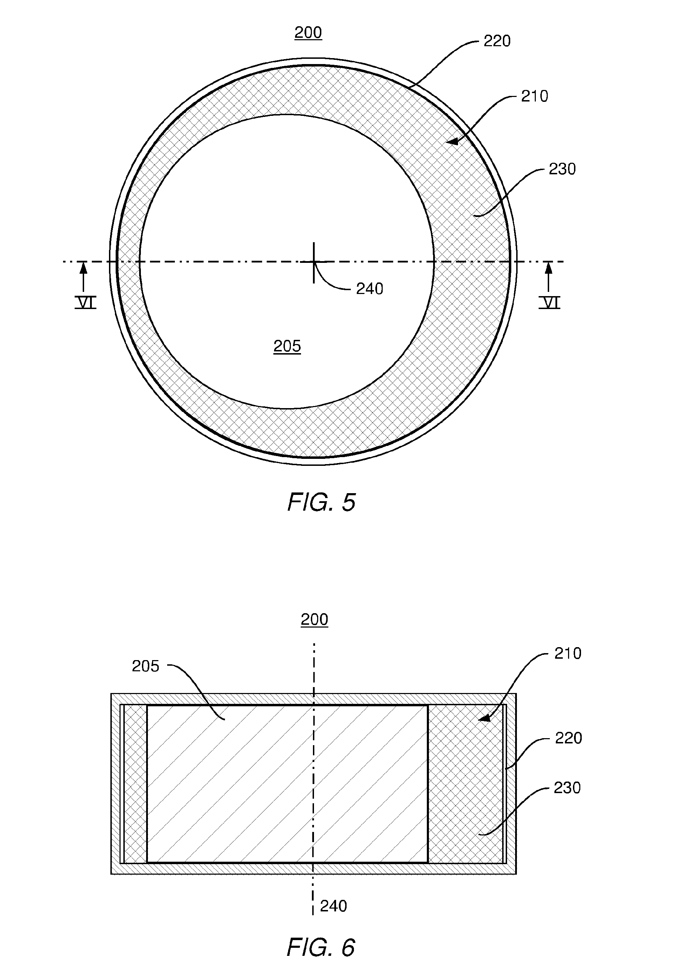

Fig. 5 shows a cross-sectional axial view of a balancing system according to another embodiment of the invention. Fig. 6 shows, along intersection line VI-VI in Fig. 5, a corresponding cross-sectional view of the balancing system according to this other embodiment of the invention. The balancing system comprises a rotational element 200 and a movable element 205 arranged in the rotational element 200. The rotational element 200 and the movable element 205 provide an annular chamber 210 with a circumferential balancing area 220 towards the rotational element 200. The balancing system further comprises a balancing substance 230 filling the chamber 210. The chamber 210 has a changeable cross section, and the changeable cross section is adapted in response to balancing of a rotary system (not shown) to be balanced, that is distribution of the balancing substance 230 in the chamber 210.

The rotational element 200 and the movable element 205 may be rigid elements, and may comprise metal, for example steel, titanium, copper or aluminium, or composite material, for example glass-fibre-reinforced material or carbon-fibre-reinforced material, or synthetic material, for example plastics or plexiglas. The chamber 210 may be caved into the rotational element 200 such as a rotor or gear wheel. The chamber 210 may be situated in a shaft, such as a hollow shaft or tubular shaft, and extend partially or fully, such as substantially fully, along the hollow shaft or tubular shaft. The movable element 205 may be hollow, or solid as indicated in Fig. 6. The movable element 205 may operate as balancing weight, preferably if it is solid. Owing to movability of the movable element 205, an area of the changeable cross section at points around the rotational element 200 is variable and a circumference of the cross section is variable, as will be discussed in more detail with reference to Fig. 8. However, as shown in Fig. 6, the area of the cross section may vary, for example, from a smaller rectangular area housing a smaller amount of balancing substance to a larger rectangular area housing a larger amount of balancing substance.

The circumferential balancing area 220 may comprise a nanostructure for improving movability and flow of the balancing substance 230, said nanostructure being, for example, formed by a material, such as a varnish, comprising nanoparticles, or imprinted on said circumferential balancing area 220.

The balancing substance 230 operating in the chamber 210 may be a thixotropic balancing substance. Owing to vibration, the thixotropic balancing substance liquefies and distributes itself along the circumferential balancing area 220, such that a CofG moves towards the rotational axis 240, that is CofR, of the rotational system (not shown), and the vibration is reduced or minimized or eliminated. Without vibration, the thixotropic balancing substance solidifies again and maintains its position. An amount of the balancing substance 230 may be inserted into the rotational element 200 during extrusion. The amount of the balancing substance 230 may also be inserted, for example injected, into the rotational element 200 through an opening (not shown), such as a hole, or a valve. The opening (not shown) may be self-sealing, vulcanised, or closed with a seal (not shown) attached, for example glued or vulcanised, to the rotational element 200. The movable element 205 and / or the amount of the balancing substance 230 may already be inserted while the rotational element 200 is formed and produced. The amount of the balancing substance 230 may preferably be initially approximately uniformly distributed in the rotational element 200.

The balancing system may be attached, for example glued or vulcanised, to the rotational system (not shown). For example, the balancing system may be glued to the rotational system using an amount of glue. The amount of glue may be distributed along the circumference of the rotational element 200.

Fig. 7 illustrates different configurations of an exemplary rotational element 200 having a changeable cross section A with a constant circumference c. Ratio R(x) = Aₓ / A₁₀₀ relates a particular area (Aₓ) to a maximum area (Aₘₐₓ = A₁₀₀). As shown on the left-hand side for ratio R = 0 %, the cross section may be a "rectangle" having a width of a₀ = 0, a length of b₀ = c₀ / 2, and, consequently, a minimum area of A₀ = 0. As shown on the right-hand side for ratio R = 100 %, the cross section may be a circle having a diameter of a₁₀₀ = b₁₀₀ = c₁₀₀ / pi, and, consequently, a maximum area of A₁₀₀ = (a₁₀₀ / 2)² * pi = (c₁₀₀ / 2)² / pi. While a circular cross section provides for the largest possible area for a given circumference, other shapes, such as rectangular, rounded rectangular, square, semicircle-shaped, bell-shaped, elliptical or oval, may be employed. However, the area of the cross section may continuously vary from A₀ to A₁₀₀. For example, as shown in the middle, the cross section may be a rounded rectangle having an area of A₅₀ = (a₁₀₀ / 2)² * pi / 2 = (c₁₀₀ / 2)² / (2*pi). While a rounded rectangular cross section is shown, other shapes, such as rectangular, square, semicircle-shaped, bell-shaped, elliptical or oval may be seen.

Fig. 8 illustrates different configurations of an exemplary rotational element 200 having a changeable cross section A with a variable circumference c. Ratio R(x) = Aₓ / A₁₀₀ relates a particular area (Aₓ) to a maximum area (Aₘₐₓ = A₁₀₀). As shown on the left-hand side for ratio R = 0 %, the cross section may be a "rectangle" having a width of a₀ = 0, a constant length of b₀ = b₅₀ = b₁₀₀, and, consequently, a circumference of c₀ = 2*b₀ = 2*b₁₀₀ and a minimum area of A₀ = 0. As shown in the middle for ratio R = 50 %, the cross section may be a rectangle having a width of a₅₀ = a₁₀₀ / 2, the constant length of b₀ = b₅₀ = b₁₀₀, and, consequently, a circumference of c₅₀ = 2*(a₅₀ +b₅₀) = a₁₀₀ + 2* b₁₀₀ and an area of A₅₀ = a₅₀ * b₅₀ = A₁₀₀ / 2. As shown on the right-hand side for ratio R = 100 %, the cross section may be a rectangle having a width of a₁₀₀, the constant length of b₁₀₀, and, consequently, a circumference of c₁₀₀ = 2*(a₁₀₀ +b₁₀₀) and an area of A₁₀₀ = a₁₀₀ * b₁₀₀. While a rectangular cross section may be straight forward to implement, other shapes, such as rounded rectangular, square, semicircle-shaped, bell-shaped, elliptical or oval, may be employed. However, the area of the cross section may continuously vary from A₀ to A₁₀₀.

As already described, the rotary system 100 may be a vehicle tyre. The rotary system 100 may also be a vehicle wheel comprising a vehicle tyre and a rim, and the rotational element 200, 201 may be attached, for example glued, vulcanised or welded, on an inner side of the rim, an outer side of the rim, on the rim towards the vehicle tyre or on the rim towards the rotational axis 240. Moreover, the invention is applicable to any rotary system including rotary systems of, to name but a few, an aircraft, for example an aeroplane or a rotorcraft, such as a helicopter; an article processing machine, for example a washing machine, a wash dryer, or a laundry dryer such as a tumble dryer or spin dryer; an engine or motor system or a power transmission system of a motor vehicle such as a car; an engine, a powertrain or powerplant, or wheelset of rolling stock; a watercraft, for example a ship such as a cargo ship; a tool, for example a power tool or machine tool; a fan; or a power generator such as an electrical power generator.

In a test series, a vehicle tyre 100 has been adapted according to the modified embodiment of the invention as shown in Fig. 4. The vehicle tyre 100 is a make Dunlop (www.dunloptires.com), model Sp Sport Maxx GT, size 96/Y. The first rotational element 200 and second rotational element 201 are bicycle tubes make Schwalbe (www.schwalbe.com), model 26" AV12 32/47-559/97, size 26 x 1,75 inch, having a wall thickness of about 0.9 mm. The glue 300 is make RENIA GmbH (www.renia.com), type Colle de Cologne.

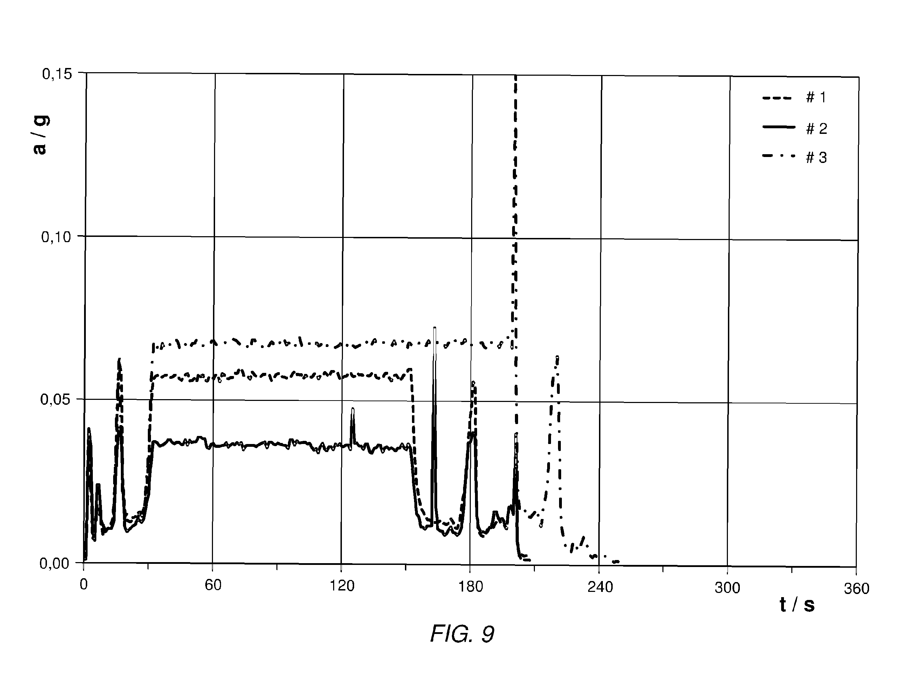

Fig. 9 shows exemplary representations of accelerations (a), that is an acceleration in pressing direction, in acceleration of gravity (g), that is approximately 9.81 m/s², of a vehicle tyre over time (t) in seconds (s) without any balancing system (#1), a vehicle tyre over time (t) in seconds (s) with metal weights (#2), and a modified vehicle tyre over time (t) in seconds with two supplemental rotational elements without balancing substance (#3). The representations derive from experimental data taken at a rate of about 1 1/s and cover periods of up to 240 s.

Indicated with #1 in Fig. 9, the tyre has been tested without any balancing system. From t = 0 s to about T = 30 s, the peripheral speed increases from 0 km/h to about 180 km/h, and the acceleration a increases and peaks to about 0.04 g and about 0.06 g. From about t = 30 s to about t = 150 s, the peripheral speed remains at this level, and the acceleration a remains at about 0.055 g. From about t = 150 s to about t = 210 s, the peripheral speed decreases to 0 km/h, and the acceleration a decreases, peaks to about 0.055 g and tails off. The peaks are caused by resonances of a test rig (not shown) during speeding up and speeding down.

Indicated with #2 in Fig. 9, the tyre has been balanced and tested with metal weights. From t = 0 s to about T = 30 s, the peripheral speed increases from 0 km/h to about 180 km/h, and the acceleration a increases and peaks to about 0.045 g and about 0.045 g. From about t = 30 s to about t = 150 s, the peripheral speed remains at this level, and the acceleration a remains at about 0.04 g. From about t = 150 s to about t = 210 s, the peripheral speed decreases to 0 km/h, and the acceleration a decreases, peaks to about 0.07 g, 0.045 g and 0.045 g and tails off. The peaks are caused by resonances of the test rig (not shown) during speeding up and speeding down.

Indicated with #3 in Fig. 9, the tyre has been modified with the two supplemental rotational elements 200, 201 without balancing substance. From t = 0 s to about T = 30 s, the peripheral speed increases from 0 km/h to about 180 km/h, and the acceleration a increases and peaks to about 0.045 g and about 0.06 g. From about t = 30 s to about t = 200 s, the peripheral speed remains at this level, and the acceleration a remains at about 0.065 g. From about t = 200 s to about t = 240 s, the peripheral speed decreases to 0 km/h, and the acceleration a decreases, peaks to about 0.15 g and 0.06 g and tails off. The peaks are caused by resonances of the test rig (not shown) during speeding up and speeding down.

A comparison #1 and #2 shows, that balancing tyre with metal weights decreases acceleration from 0.055 g to 0.04 g, and, thus, vibration as could be expected.

A comparison of #1 and #3 shows, that the tyre 100 modified by adding the two supplemental rotational elements 200, 201 without balancing substance increases acceleration from 0.055 g to 0.065 g, and, thus, vibration, as could be expected.

Subsequently, each of the chambers 210, 211 has been filled through an opening (not shown) in the rotational elements 200, 201 with 150 g of a thixotropic balancing substance comprising 97 % by weight of a balancing substance in accordance with the composition number 6 in Table 1 of international patent application no. PCT/EP2009/065058, and 3 % by weight polytetrafluoroethylene (PTFE) nanoparticles in accordance with international patent application no. PCT/EP2010/065125. The openings (not shown) have been closed with seals 260 glued to the rotational elements 200, 201. However, the amounts of the balancing substance have not been uniformly distributed after filling.

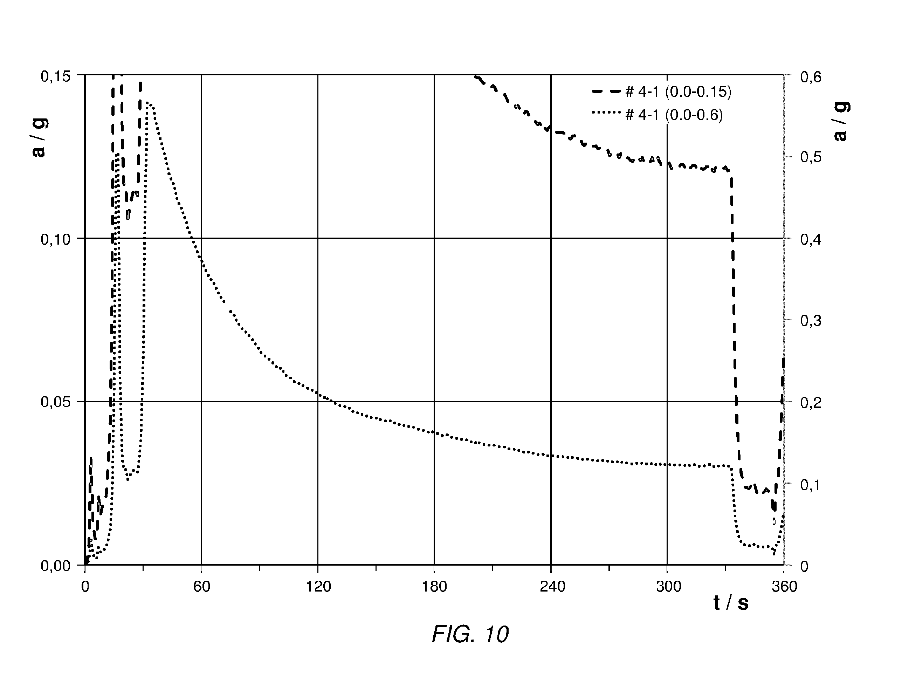

Figs 10-14 show exemplary representations of accelerations of a vehicle tyre over time in five successive cycles with two supplemental rotational elements each of which comprising the amount of balancing substance. The representations derive from experimental data taken at a rate of about 1 1/s and cover periods of up to 360 s.

Fig. 10 shows an exemplary representation of accelerations of a vehicle tyre over time in a first cycle with two supplemental rotational elements each of which comprising the amount of the balancing substance (#4-1 (0.0-0.15)) in the same scale as in Fig. 9 as well as in another scale zoomed-out by factor four (#4-1 (0.0-0.6)).

Indicated with #4-1 (0.0-0.6) in Fig. 10 for the first cycle, the tyre has been tested with the two supplemental rotational elements 200, 201, each of which comprising the amount of the balancing substance 230, 231. From t = 0 s to about T = 30 s, the peripheral speed increases from 0 km/h to about 180 km/h, and the acceleration a increases and peaks to about 0.55 g. From about t = 30 s to about t = 330 s, the peripheral speed remains at this level, and the acceleration a exponentially decays from about 0.58 g to about 0.12 g. From about t = 330 s to about t = 360 s, the peripheral speed decreases to 0 km/h, and the acceleration a decreases, peaks to about 0.08 g.

For convenience, #4-1 (0.0-0.15) shows the first cycle in Fig. 10 also in the same scale as in Fig. 9; however, accelerations above 0.15 g lie outside this presentation.

The peaks are caused by resonances of a test rig (not shown) during speeding up and speeding down. The exponential decay is caused by rapid distribution of the amounts of the thixotropic balancing substance in the chambers.

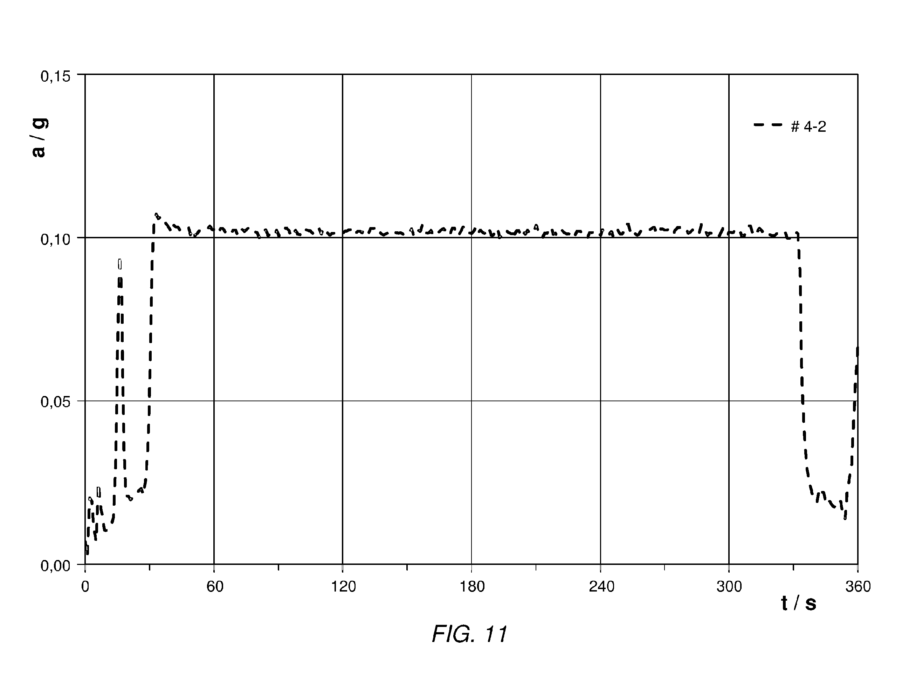

Fig. 11 shows an exemplary representation of accelerations of the vehicle tyre over time in a second cycle with two supplemental rotational elements each of which comprising the amount of the balancing substance (#4-2) in the same scale as in Fig. 9.

In Fig. 11, #4-2 indicates the second cycle of the test of the tyre with the two supplemental rotational elements 200, 201, each of which comprising the amount of the balancing substance 230, 231. From t = 0 s to about T = 30 s, the peripheral speed increases from 0 km/h to about 180 km/h, and the acceleration a increases and peaks to about 0.09 g. From about t = 30 s to about t = 330 s, the peripheral speed remains at this level, and the acceleration a slightly decreases from about 0.11 g to about 0.105 g. From about t = 330 s to about t = 360 s, the peripheral speed decreases to 0 km/h, and the acceleration a decreases, peaks to about 0.07 g.

The peaks, which are smaller than before, are caused by resonances of a test rig (not shown) during speeding up and speeding down. The decrease is caused by further distribution of the amounts of the thixotropic balancing substance in the chambers.

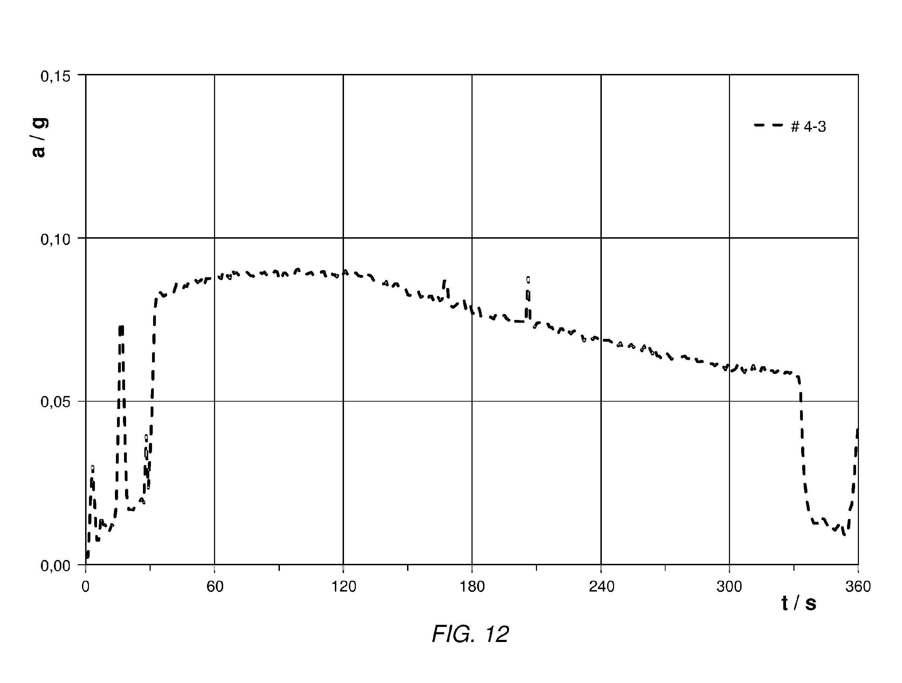

Fig. 12 shows an exemplary representation of accelerations of the vehicle tyre over time in a third cycle with two supplemental rotational elements each of which comprising the amount of the balancing substance (#4-3) in the same scale as in Fig. 9.

In Fig. 12, #4-3 indicates the third cycle of the test of the tyre with the two supplemental rotational elements 200, 201, each of which comprising the amount of the balancing substance 230, 231. From t = 0 s to about T = 30 s, the peripheral speed increases from 0 km/h to about 180 km/h, and the acceleration a increases and peaks to about 0.07 g. From about t = 30 s to about t = 330 s, the peripheral speed remains at this level, and the acceleration a slightly increases from about 0.08 g and subsequently decreases to about 0.065 g. From about t = 330 s to about t = 360 s, the peripheral speed decreases to 0 km/h, and the acceleration a decreases, peaks to about 0.04 g.

The peaks, which are again smaller than before, are caused by resonances of a test rig (not shown) during speeding up and speeding down. The decrease is caused by further distribution of the amounts of the thixotropic balancing substance in the chambers.

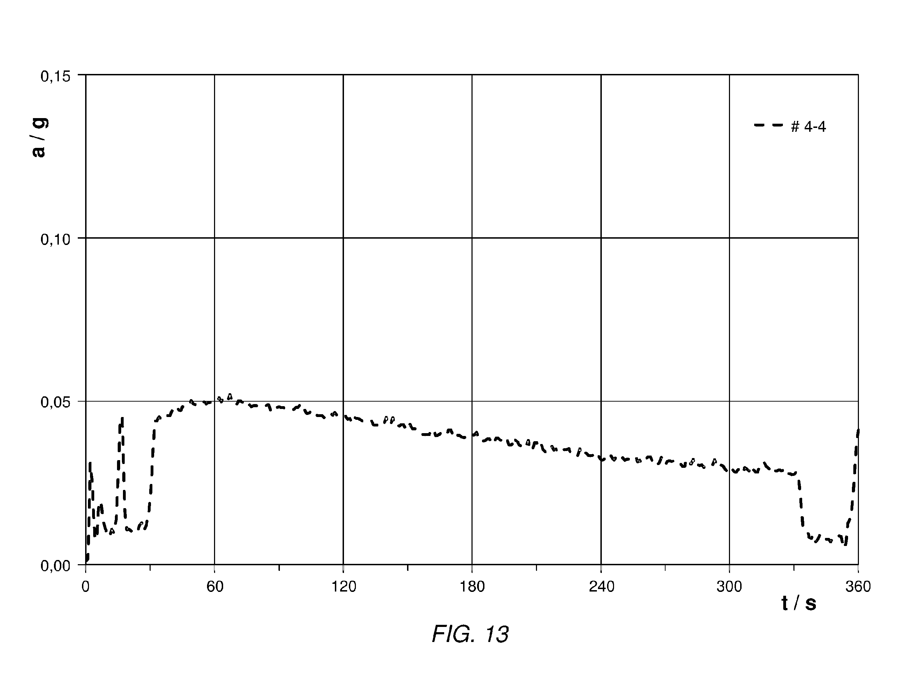

Fig. 13 shows an exemplary representation of accelerations of the vehicle tyre over time in a fourth cycle with two supplemental rotational elements each of which comprising the amount of the balancing substance (#4-4) in the same scale as in Fig. 9.

In Fig. 13, #4-4 indicates the fourth cycle of the test of the tyre with the two supplemental rotational elements 200, 201, each of which comprising the amount of the balancing substance 230, 231. From t = 0 s to about T = 30 s, the peripheral speed increases from 0 km/h to about 180 km/h, and the acceleration a increases and peaks to about 0.045 g. From about t = 30 s to about t = 330 s, the peripheral speed remains at this level, and the acceleration a slightly increases from about 0.045 g and subsequently decreases to about 0.03 g. From about t = 330 s to about t = 360 s, the peripheral speed decreases to 0 km/h, and the acceleration a decreases, peaks to about 0.04 g.

The peaks, which are again smaller than before, are caused by resonances of a test rig (not shown) during speeding up and speeding down. The decrease is caused by further distribution of the amounts of the thixotropic balancing substance in the chambers.

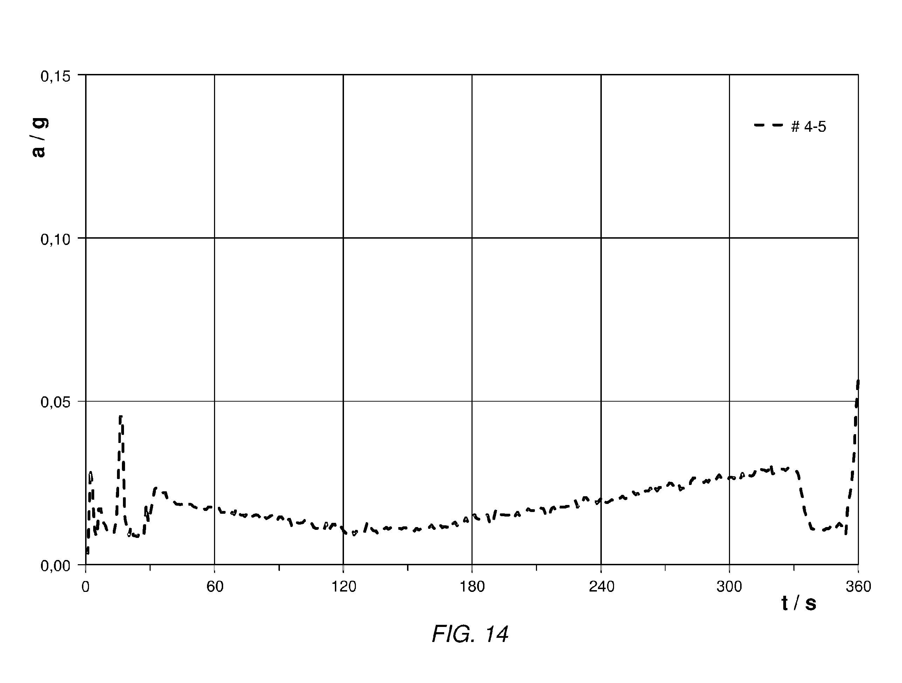

Fig. 14 shows an exemplary representation of accelerations of the vehicle tyre over time in a fifth cycle with two supplemental rotational elements each of which comprising the amount of the balancing substance (#4-5) in the same scale as in Fig. 9.

In Fig. 14, #4-5 indicates the fifth cycle of the test of the tyre with the two supplemental rotational elements 200, 201, each of which comprising the amount of the balancing substance 230, 231. From t = 0 s to about T = 30 s, the peripheral speed increases from 0 km/h to about 180 km/h, and the acceleration a increases and peaks to about 0.045 g. From about t = 30 s to about t = 330 s, the peripheral speed remains at this level, and the acceleration a further decreases from about 0.023 g to a minimum of about 0.01 at about 120 s and subsequently increases to about 0.03 g. From about t = 330 s to about t = 360 s, the peripheral speed decreases to 0 km/h, and the acceleration a decreases, peaks to about 0.06 g.

Again, the peaks are caused by resonances of a test rig (not shown) during speeding up and speeding down. The decrease is caused by further distribution of the amounts of the thixotropic balancing substance in the chambers. At the minimum, the amounts of the thixotropic balancing substance have distributes within the rotational elements such that the vibration the vibration is reduced or minimized. However, the subsequent increase has been caused by a seal 260 accidently detaching from the rotational element 200, and the balancing substance uncontrollably leaking into the tyre 100.

Further, a comparison of Figs 9 and 14 shows, that a balancing system according to an embodiment of the invention substantially reduces, compared to a vehicle tyre balanced with metal weights, vibration in the vehicle tyre with two supplemental rotational elements each of which comprising the amount of the balancing substance from about 0.04 g to about 0.01 g, that is a relative decrease of 75 %.

The balancing substance 230, 231 may be a thixotropic tyre balancing composition disclosed in EP patent application no. 0 281 252 and corresponding US patent no. 4,867,792, which are hereby incorporated by reference in their entirety, having a yield stress value between 1 Pa and 260 Pa being capable of balancing tyres by being able to flow under the influence of the vibrations induced when a heavy spot on the tyre hits the road surface.

The balancing substance 230, 231 may be a tyre gel balancing composition disclosed in European patent no. 0 557 365 and US corresponding patent no. 5,431,726, which are hereby incorporated by reference in their entirety, having a storage modulus of between 3000 and 15000 Pa and the specific gravity less than 1000 kg/m^3 in the temperature range between -20 and +90 °C, preferably its storage modulus is about 9000 Pa, being capable of balancing tyres by being able to flow under the vibrations caused by imbalance in a wheel assembly. The composition preferably comprises a mixture of: 1) paraffinic oils, polybutene oils, polyolesters or polyol ethers; 2) hydrophobic or hydrophilic fumed silica; 3) polyalkyl-methacrylates, styrene-ethylene-propylene block copolymers or polyhydroxycarboxylic acid derivatives; and optionally corrosion inhibitors and antioxidants.

The balancing substance 230, 231 may be one of the tyre balancing compositions disclosed in European patent no. 1 196 299 B1 and corresponding US publication nos US-2005-0159534-A1 and US-2010-0252174-A1, which are hereby incorporated by reference in their entirety, having improved balancing properties and comprise a visco-plastic gel and solid bodies having an average smallest dimension in the range of 0.5-5 mm; preferably 1-4 mm, more preferably around 3 mm. When applied in a layer to the inside of a motor vehicle tyre, the compositions act by allowing the solid bodies move through the gel and to concentrate in areas to counteract imbalances. The solid bodies preferably have an average ratio alpha between their smallest and their largest dimension of alpha <=2, more preferably alpha < = 1.5, especially around 1. The visco-plastic gel preferably has a storage modulus (G') between 1000 Pa and 25000 Pa at 22 °C, a loss modulus (G") smaller than the storage modulus, and a critical yield stress above 3 Pa at 22 °C. The bodies may be shaped as prolate or oblate ellipsoids, cylinders, rectangular parallelepipeds, or spheres, or mixtures of such bodies; they may have an apparent specific gravity in the range of 500-3000 kg/m³, preferably 600-2000 kg/m³, in particular 700-1000 kg/m³, especially 800-900 kg/m³; they may be made from polyolefins, polystyrene, polyvinyl chloride, polyamide, rubber or glass. The weight ratio between the solid bodies and the gel is from 10:1 to 1:10, preferably from 5:1 to 1:5, in particular from 2:1 to 3:1, such as from 1:1 to 1:2.

The balancing substance 230, 231 may be one of the visco-elastic tyre balancing compositions disclosed in international patent application WO 2010/055097, which is hereby incorporated by reference in its entirety, comprising 1) 85 to 97 % by weight of a glycol ether component comprising one or more ethylene/propylene glycol copolymer ethers of the general formula (I) or the general (II) or mixtures thereof R-O {[CH(C₁₋₁₃)CH₂-O-]ₘ [CH₂-CH₂-O-]"}H (I) R₁-(O- {[CH(CHOCH₂-O-]ₘ [CH₂-CH₂-O-]ₙ}H)₂ (II) wherein R is hydrogen or an alkyl group of 2-8 carbon atoms; R₁ is an alkylene moiety of 2-8 carbon atoms in which the two substituents are not carried on the same carbon atom; m is the mole percentage of propylene glycol in the ethylene/propylene glycol copolymer moiety or moieties; and n is the mole percentage of ethylene glycol in the ethylene/propylene glycol copolymer moiety or moieties, wherein the ratio n: m is in the range from 35:65 to 80:20; each glycol copolymer compound having a number average molecular weight in the range of 2000-10000; and 2) 3 to 15 % by weight of a fumed silica gel former; said balancing compositions being visco-elastic and having a Storage Modulus (G') between 1500 Pa and 5000 Pa at 22 °C, a Loss Modulus (G") smaller than the Storage Modulus up to a Cross Over Frequency of 10-40 Hz, and a Critical Yield Stress exceeding 2 Pa.

The balancing substance 230, 231 may be a composition for balancing a rotary system disclosed in international patent application no. WO 2011/042549, which is hereby incorporated by reference in its entirety, comprising an amount of a thixotropic balancing substance; characterized by an amount of hydrophobic particles or nanoparticles distributed in said amount of said thixotropic balancing substance.

The balancing substance 230, 231 may comprise a plurality of balls. The balls may comprise metal, such as steel, titanium, copper or aluminium, composite material, such as aluminium oxide or ceramics, or plastics. The balls may be polished or coated, for example polytetrafluoroethylene- (PTFE)- coated. The balls may have a diameter between approximately 1 mm and approximately 50 mm, for example approximately 15 mm.

Embodiments of the inventions comprise a corresponding apparatus that may carry out the method.

Embodiments of the inventions comprise a corresponding system that may carry out the method, possibly across a number of devices.

Although specific embodiments have been illustrated and described herein, it will be appreciated by those of ordinary skill in the art, that any arrangement which is calculated to achieve the same purpose may be substituted for the specific embodiments shown. It is to be understood, that the above description is intended to be illustrative and not restrictive. This application is intended to cover any adaptations or variations of the invention. Combinations of the above embodiments and many other embodiments will be apparent to those of skill in the art upon reading and understanding the above description. The scope of the invention includes any other embodiments and applications in which the above structures and methods may be used. The scope of the invention is, therefore, defined only by the appended claims, along with the full scope of equivalents to which such claims are entitled.

## Claims

1. A method of reducing vibration in a rotary system (100), comprising:
- providing a rotational element (200, 201) comprising a chamber (210, 211) comprising a circumferential balancing area (220, 221), having a cross section and being filled with an amount of a balancing substance (230, 231), said rotational element (200, 201) and said chamber (210, 211) having a rotational axis (240),
- balancing said rotary system (100), **characterized in that**
- said cross section is a changeable cross section, and
- said cross section is adapted in response to said balancing.

2. The method of claim 1, further comprising:
- rotating said rotational element (200, 201) about said rotational axis (240), such that said balancing substance (230, 231) distributes itself along the circumferential balancing area (220, 221) and adapts said cross section, and an imbalance of said rotational system (100) is reduced.

3. The method of claim 1 or 2, further comprising:
- attaching said rotational element (200, 201) to said rotary system (100).

4. The method of claim 3, wherein:
- attaching said rotational element (200, 201) comprises affixing, gluing or bracing said rotational element (200, 201) to said rotary system (100).

5. The method of claim 3 or 4, wherein:
- said rotary system (100) is a vehicle tyre or a vehicle wheel comprising said vehicle tyre and a rim; and
- attaching said rotational element (200, 201) comprises:
- inserting said rotational element (200, 201) into said tyre,
- attaching said rotational element (200, 201) to said rim, wherein said rotational element (200, 201) may be attached on an inner side of said rim, an outer side of said rim, on said rim towards said vehicle tyre or on said rim towards said rotational axis (240), or
- a combination thereof.

6. The method of claim 1 or 2, wherein:
- said rotational element (200, 201) is an original element of said rotary system (100), a replacement element of said rotary system (100), or a supplemental element to said rotary system (100);
- said rotational element (200, 201) is a hollow shaft or tubular shaft;
- said rotational element (200, 201) is an articulated shaft, for example a cardan shaft;
- said rotational element (200, 201) is flexible;
- said rotational element (200, 201) is ductile;
- said rotational element (200, 201) is a tube, for example a flexible tube;
- said rotational element (200, 201) is a cover, for example a flexible cover, forming said cross section together with said rotary system (100); or
- a combination thereof.

7. The method of claim 1 or 2, wherein:
- said chamber (210, 211) is annular or ring-shaped, or cylindrical;
- said chamber (210, 211) is closed or sealed;
- said chamber (210, 211) has a diameter of between 0.005 m and 2 m, or between 0.01 m and 1 m, or between 0.02 m and 0.5 m, or between 0.05 m and 0.2 m, or 0.1 m;
- said chamber (200, 211) has a length of between 0.001 m and 10 m, or 0.002 m and 5 m, or 0.005 m and 2 m, or between 0.01 m and 1 m, or between 0.02 m and 0.5 m, or between 0.05 m and 0.2 m, or 0.1 m;
- said cross section is rectangular, for example rounded rectangular, square, semicircle-shaped, bell-shaped, circular, elliptical or oval;
- said cross section has a circumference, said circumference having a constant length or a variable length; or
- a combination thereof.

8. The method of claim 1 or 2, wherein:
- said amount of said balancing substance (230, 231) is between 0.001 kg and 1000 kg, or between 0.002 kg and 500 kg, or between 0.005 kg and 200 kg, or between 0.01 kg and 100 kg, or between 0.02 kg and 50 kg, or between 0.05 kg and 20 kg, or between 0.1 kg and 10 kg, or between 0.2 kg and 5 kg, or between 0.5 kg and 2 kg, or 1 kg.

9. The method of claim 1 or 2, wherein:
- said balancing substance (230, 231) is a thixotropic balancing substance.

10. An apparatus for reducing vibration in a rotary system (100), comprising:
- a rotational element (200, 201) comprising a chamber (210, 211) comprising a circumferential balancing area (220, 221), having a cross section and being filled with an amount of a balancing substance (230, 231), said rotational element (200, 201) and said chamber (210, 211) having a rotational axis (240),
**characterized in that**
- said cross section is a changeable cross section, and
- said cross section is adaptable in response to balancing said rotary system (100).

11. A balancing system for reducing vibration in a rotary system (100), comprising:
- a rotational element (200, 201) comprising a chamber (210, 211) comprising a circumferential balancing area (220, 221), having a cross section and being filled with an amount of a balancing substance (230, 231), said rotational element (200, 201) and said chamber (210, 211) having a rotational axis (240),
**characterized in that**
- said cross section is a changeable cross section, and
- said cross section is adaptable in response to balancing said rotary system (100).
